# FASCICULE DE BREVET EUROPEEN

(11) **EP 0 946 380 B1**
(45) Date de publication et mention de la délivrance du brevet: **05.03.2003**
(21) Numéro de dépôt: 97953974.9
(22) Date de dépôt: 30.12.1997
(51) Int. Cl.: B60R 22/26

(54) **AGENCEMENT DE SIEGE DE VEHICULE AUTOMOBILE ASSOCIE A UNE CEINTURE DE SECURITE**
SITZVORRICHRUNG FÜR KRAFTFAHRZEUG IN VERBINDUNG MIT EINEM SICHERHEITSGÜRTEL
LAY-OUT OF A MOTOR VEHICLE SEAT ASSOCIATED WITH A SAFETY BELT

(30) Priorité: 30.12.1996 FR 9616175
(43) Date de publication de la demande: 06.10.1999
(73) Titulaire: Renault s.a.s., 92100 Boulogne Billancourt (FR)
(72) Inventeur: URSET, Charles, F-95610 Eragny sur Oise (FR); CASADEI, Nelson, F-92140 Clamart (FR)
(86) Numéro de dépôt international: FR9702452
(87) Numéro de publication internationale: WO98029282

(56) Documents cités:
- EP-A- 0 511 100
- FR-A- 2 511 959

## Description

La présente invention concerne un agencement de siège de véhicule automobile.

L'invention concerne plus particulièrement un agencement de siège de véhicule automobile comportant un élément d'assise et un dossier, qui est éventuellement monté articulé par rapport au coussin d'assise autour d'un axe horizontal agencé à la partie inférieure du dossier, du type dans lequel le siège est associé à une ceinture de sécurité comportant une sangle dont au moins une extrémité peut être reliée à un point d'accrochage de la ceinture de sécurité sur la structure du véhicule.

Selon d'autres agencements connus, visant à améliorer le confort et la sécurité du conducteur et des passagers, la ceinture de sécurité peut être associée à un enrouleur de ceinture, à un dispositif de mise sous tension de la ceinture en cas de choc accidentel du véhicule et, lorsqu'il s'agit d'une ceinture à deux brins, c'est-à-dire un brin ventral et un brin diagonal s'étendant devant le thorax de l'occupant du siège, la ceinture est dite du type à trois points, c'est-à-dire qu'elle comporte deux points inférieur et supérieur d'accrochage et un point inférieur de renvoi.

Selon une conception connue, les différents points d'accrochage et/ou de renvoi sont des points de la structure du véhicule.

La publication EP-A-0511100 décrit une structure de siège sur laquelle est embarqué l'ensemble de la ceinture de sécurité et des points de fixation de celle-ci, et en particulier un des points qui est constitué par un enrouleur de sangle de ladite ceinture.

Il est par ailleurs connu, dans les véhicules présentant une possibilité de modularité d'aménagement du véhicule, de monter le siège rapporté sur un support creux en forme de caisson de rangement dont la face supérieure est obturée au moins partiellement par l'élément d'assise du siège.

Dans le cas d'un tel type de siège, il est souhaitable que le siège, amovible par rapport au caisson de support, soit indépendant des moyens d'accrochage et de renvoi de la ceinture, ou que la ceinture constitue avec le siège un ensemble autonome pouvant être séparé du bac ou caisson de support, des points d'accrochage ou de renvoi de la ceinture reliés à la structure du véhicule devant pouvoir permettre l'adaptation de la ceinture de sécurité à différentes positions et orientations du siège dans le véhicule.

Dans ce but, l'invention propose un agencement de siège de véhicule automobile comportant un élément d'assise et un dossier, du type dans lequel le siège est associé à une ceinture de sécurité comportant une sangle dont au moins une extrémité est reliée à un point d'accrochage de la ceinture de sécurité sur la structure du véhicule, et du type dans lequel le siège est rapporté sur un support creux, caractérisé en ce que ledit point d'accrochage est agencé à l'intérieur du support.

Selon d'autres caractéristiques de l'invention :
- le support creux est un caisson dont la face supérieure ouverte est obturée au moins en partie par l'élément d'assise ;
- le point d'accrochage est agencé le long de la face interne d'une paroi latérale du support en forme caisson ;
- ledit point d'accrochage de la ceinture de sécurité est un point fixe d'accrochage ;
- ledit point d'accrochage de la ceinture de sécurité est associé à un dispositif de mise sous tension de la ceinture de sécurité ;
- ledit point d'accrochage de la ceinture de sécurité est associé à un enrouleur de sangle ;
- la ceinture de sécurité comporte un pêne dont le corps est traversé de manière coulissante par la sangle et est prévu pour être reçu de manière libérable dans une gâche fixée à l'intérieur du support creux ;
- la ceinture de sécurité est associée à un dispositif supérieur de renvoi qui est situé sur le dossier du siège ;
- le dispositif de renvoi comporte un point supérieur d'ancrage situé à la partie supérieure du dossier et un renvoi relié au point d'ancrage et dans lequel coulisse la sangle ;
- le renvoi comporte un pêne qui est reçu de manière libérable dans une gâche associée au point d'ancrage ;
- l'autre extrémité libre de la sangle est associée à un enrouleur de sangle qui est fixé à la partie supérieure du dossier, et la sangle comporte un renvoi dans lequel coulisse la sangle et qui comporte un pêne qui est reçu de manière libérable dans une gâche fixée à l'intérieur du support creux.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective, avec arrachement partiel, qui illustre un premier mode de réalisation d'un agencement d'un siège conforme aux enseignements de l'invention comportant un enrouleur de sangle et un dispositif de mise sous tension agencés dans le support inférieur du siège, et un point supérieur de renvoi de sangle porté par le dossier du siège ;
- la figure 2 est une vue de détail qui illustre le point supérieur de renvoi de la sangle ;
- la figure 3 est une vue similaire à celle de la figure 1 qui montre un deuxième mode de réalisation d'un agencement conforme aux enseignements de l'invention dans lequel un point d'accrochage inférieur de la ceinture est associé à un dispositif de mise sous tension qui, avec un point de renvoi, est agencé dans le support creux, et dans lequel la partie supérieure du dossier du siège porte un enrouleur de sangle associé à l'une des extrémités libres de la ceinture ; et
- la figure 4 est une vue de détail qui illustre l'enrouleur de sangle agencé à la partie supérieure du dossier.

Dans la description qui va suivre, des composants identiques, similaires ou analogues sont désignés par les mêmes chiffres de référence sur l'ensemble des figures.

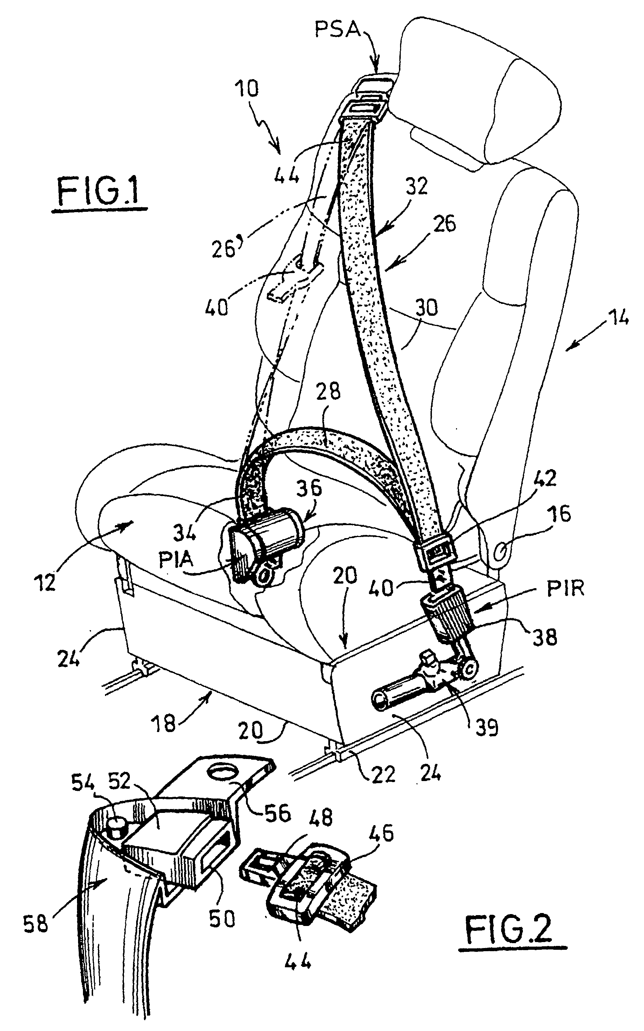

On a représenté à la figure 1 un siège 10 de véhicule automobile qui, selon une conception connue, comporte un élément inférieur d'assise 12, aussi appelé coussin d'assise, s'étendant sensiblement dans un plan horizontal et un dossier supérieur 14 qui s'étend sensiblement dans un plan vertical et qui est par exemple monté articulé par rapport au coussin d'assise 12 autour d'un axe inférieur 16.

Le coussin d'assise 12 et le dossier 14 comportent des éléments de structure permettant leur articulation mutuelle et la fixation de l'ensemble du siège 10, de préférence de manière amovible, sur un support inférieur 18 conformé en caisson de rangement.

A cet effet, le support 18 comporte un fond 20 qui est prévu pour permettre l'accrochage réglable du siège 10 sur le plancher 20 du véhicule, par exemple par l'intermédiaire de rails 22 de réglage de la position longitudinale du siège 10 par rapport à l'habitacle du véhicule.

Le support 18 en forme de caisson comporte aussi quatre parois latérales qui délimitent une face supérieure ouverte qui, en position montée du siège 10 sur le support 18, est obturée par l'élément d'assise 12 du siège 10.

Le caisson 18 comporte notamment deux parois latérales longitudinales et opposées 24 qui s'étendent parallèlement à la direction longitudinale d'assise de l'occupant du siège.

Conformément aux enseignements de l'invention, le siège 10 fixé à la partie supérieure du support creux 18 est équipé d'une ceinture de sécurité 26 qui, dans les deux modes de réalisation représentés sur les figures, est une ceinture à trois points déterminant un brin inférieur ou brin ventral 28 et un brin supérieur d'orientation inclinée 30 qui s'étend en diagonale devant le thorax de l'occupant (non représenté sur les figures).

La ceinture 26 est constituée par une sangle unique 32 dont une première extrémité libre 34 est fixée à l'intérieur du support creux 18 à un point inférieur d'accrochage PIA.

Dans l'exemple illustré à la figure 1, l'extrémité libre inférieure 34 est reliée à un enrouleur de ceinture 36, de conception connue, dont le corps est fixé sur la face interne de la paroi longitudinale 24 du support creux 18.

Le brin ventral 28 s'étend depuis le point inférieur d'accrochage PIA jusqu'à un point inférieur de renvoi PIR qui est ici constitué par une gâche, de structure connue, dont le corps 38 est fixé à l'intérieur du caisson 18, ici avec adjonction d'un dispositif 39, de conception connue, de mise sous tension de la ceinture de sécurité 26.

La gâche 38 est prévue pour recevoir un pêne 40 dont l'embase 42 est traversée de manière coulissante par la sangle 32, l'embase 42 délimitant, de manière réglable, le brin ventral 28 par rapport au brin diagonal 30.

Selon une conception connue, le pêne 40 est reçu de manière libérable, commandé par l'occupant du siège 10, de manière à permettre à cet occupant de se sangler au moyen de la ceinture 26 ou de se libérer en vue de quitter le siège 10.

La seconde extrémité libre 44 de la sangle 32, c'est-à-dire l'extrémité supérieure du brin diagonal 30, est reliée de manière amovible à un point supérieur d'ancrage PSA.

Le point supérieur d'ancrage PSA est ici un point d'ancrage amovible, c'est-à-dire que l'extrémité libre 44 est fixée au corps 46 d'un pêne 48, de conception générale connue, qui est conçu pour être reçu de manière libérable dans une gâche 50 dont le corps 52 est fixé en un point 54 de la partie supérieure 56 de la coque 58 du dossier 14.

A la figure 1, on a représenté la ceinture de sécurité 26 en trait plein dans la position sanglée et en trait pointillé on a représenté la ceinture 26' dans la position qu'elle occupe lorsque le passager a libéré le pêne 40 de la gâche 38.

Dans cette position escamotée de la ceinture 26', le pêne 40' est porté par la sangle 32'.

Si l'utilisateur du véhicule souhaite démonter le siège 10 du support 18, il lui suffit de libérer le pêne 48 de la gâche 50, c'est-à-dire de supprimer le point supérieur d'ancrage PSA et de retirer le siège 10 du support 18, l'ensemble constitué par la sangle 32 et le pêne 48 pouvant être alors reçu à l'intérieur du caisson 18.

La conception selon l'invention ne fait donc appel à aucun point d'accrochage ou de renvoi qui soit externe au support creux 18 et/ou à la structure du siège 10.

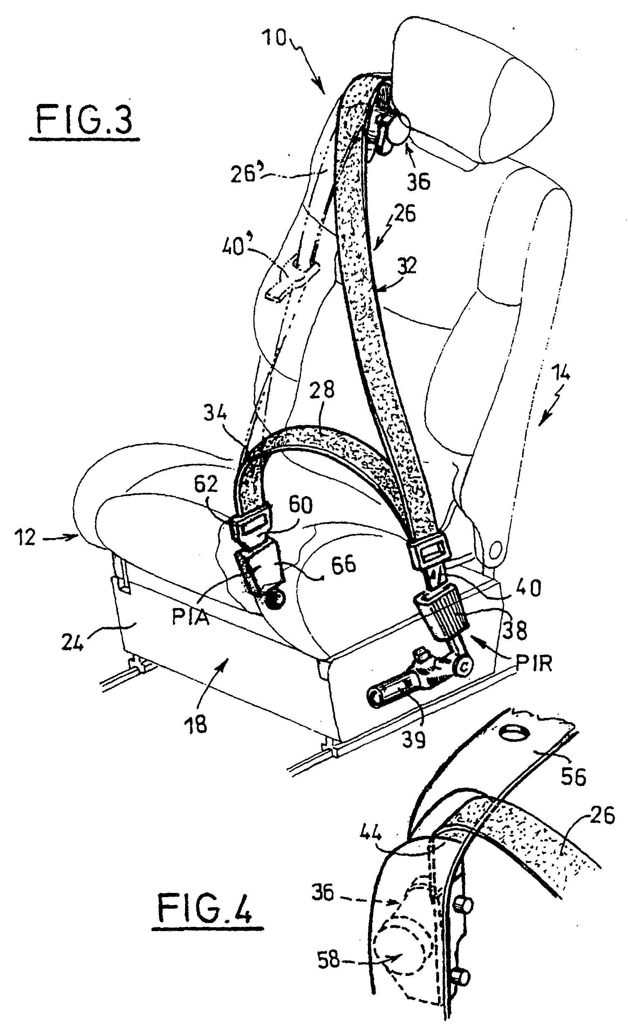

On décrira maintenant le deuxième mode de réalisation illustré aux figures 3 et 4.

Dans ce deuxième mode de réalisation, la première extrémité libre 34 du brin ventral 28 de la ceinture de sécurité 26 est reliée au point inférieur d'accrochage PIA qui est ici un point fixe d'accrochage, c'est-à-dire sans enrouleur, et ceci par l'intermédiaire d'un pêne 60 dont le corps 62 est fixé à l'extrémité 34 et qui est reçu dans une gâche 64 dont le corps 66 est fixé, éventuellement de manière articulée, sur la face interne de la face latérale longitudinale 24 du caisson formant support creux 18.

Le point inférieur de renvoi PIR est en tous points identique à celui qui a été décrit en référence à la figure 1, tandis que la seconde extrémité libre 44 de la ceinture de sécurité, qui correspond ici à l'extrémité supérieure du brin diagonal 30, est ici associée à un enrouleur 36 dont le corps est fixé à la partie supérieure 56 de la coque 58 du dossier.

Dans ce mode de réalisation, lorsque l'utilisateur du véhicule souhaite démonter le siège 10 de son support creux 18, il libère les pênes 60 et 40, c'est-à-dire qu'il désolidarise la ceinture de sécurité 26 de son point inférieur d'accrochage PIA et de son point inférieur de renvoi PIR, l'ensemble de la ceinture de sécurité avec sa sangle 32 et ses deux pênes 60 et 40 étant alors porté par le dossier 14 du siège 10 et étant plus particulièrement ramené à la partie supérieure de ce dernier du fait de l'action de l'enrouleur 36.

Après avoir ôté le siège, le caisson de rangement 18 ne comporte plus que les corps des gâches 64 et 38 agencés le long des faces internes des parois latérales longitudinales du caisson 18.

Sans sortir du cadre de l'invention le caisson peut, à titre de variante, ne plus être un simple caisson formant bac de rangement amovible, mais être un caisson structurelle du véhicule délimité notamment par une tôle supérieure du plancher de l'habitacle.

## Revendications

1. Agencement de siège (10) de véhicule automobile comportant un élément d'assise (12) et un dossier (14), du type dans lequel le siège (10) est associé à une ceinture de sécurité (26) comportant une sangle (32) fixée par un point inférieur d'accrochage (PIA), par un point inférieur de renvoi (PIR) et par un point supérieur d'ancrage (PSA), et dans lequel le siège (10) est monté amovible sur un support creux (18) indépendant de la structure de siège, **caractérisé en ce qu'**au moins le point inférieur d'accrochage (PIA) est agencé à l'intérieur du support (18).

2. Agencement selon la revendication précédente, **caractérisé en ce que** le support creux (18) est un caisson dont la face supérieure ouverte est obturée au moins en partie par l'élément d'assise (12).

3. Agencement selon la revendication précédente, **caractérisé en ce que** le point inférieur d'accrochage est agencé le long de la face interne d'une paroi latérale du support en forme de caisson.

4. Agencement selon l'une quelconque des revendications précédentes, **caractérisé en ce que** ledit point inférieur d'accrochage (PIA) de la ceinture de sécurité est un point fixe d'accrochage.

5. Agencement selon l'une quelconque des revendications précédentes, **caractérisé en ce que** ledit point inférieur d'accrochage (PIA) ou de renvoi (PIR) de la ceinture de sécurité (26) est associé à un dispositif de mise sous tension (39) de la ceinture de sécurité.

6. Agencement selon l'une quelconque des revendications précédentes, **caractérisé en ce que** ledit point inférieur d'accrochage (PIA) de la ceinture de sécurité est associé à un enrouleur (36) de sangle (32).

7. Agencement selon l'une quelconque des revendications précédentes, **caractérisé en ce que** la ceinture de sécurité (26) comporte un pêne (40, 60) dont le corps est traversé de manière coulissante par la sangle (32) et est prévu pour être reçu de manière libérable dans une gâche (38, 64) fixée à l'intérieur du support creux (18).

8. Agencement selon l'une quelconque des revendications précédentes, **caractérisé en ce que** la ceinture de sécurité (26) est associée à un dispositif inférieur de renvoi qui est agencé à l'intérieur du support (18).

9. Agencement selon l'une quelconque des revendications précédentes, **caractérisé en ce que** le siège (10) comporte un point supérieur d'ancrage (PSA) situé à la partie supérieure du dossier.

10. Agencement selon l'une des revendications 4 ou 5, **caractérisé en ce que** l'autre extrémité libre (44) de la sangle (32) est associée à un enrouleur de sangle (36) qui est fixé à la partie supérieure (56) du dossier, et **en ce que** la sangle comporte un renvoi dans lequel coulisse la sangle et qui comporte un pêne (40) qui est reçu de manière libérable dans une gâche (38) fixée à l'intérieur du support creux (38).

## Patentansprüche

1. Ausgestaltung eines Sitz (10) für ein Kraftfahrzeug, der ein Sitzteil (12) und eine Rücklehne (14) aufweist, wobei der Sitz (10) mit einem Sicherheitsgurt (26) ausgestattet ist, welcher ein Gurtband (32) aufweist, das durch ein unteres Verankerungsteil (PIA), ein unteres Umlenkteil (PIR) und ein oberes Verankerungsteil (PSA) festgehalten wird und wobei der Sitz abnehmbar auf einer hohlen, vom Sitzaufbau unabhängigen Halterung (18) angeordnet ist, **dadurch gekennzeichnet, dass** wenigstens das untere Verankerungsteil (PIA) im Inneren der Halterung (18) angeordnet ist.

2. Ausgestaltung nach dem vorhergehenden Anspruch, **dadurch gekennzeichnet, dass** die hohle Halterung (18) ein Kasten ist, dessen offene Oberseite wenigstens teilweise durch das Sitzteil (12) verschlossen ist.

3. Ausgestaltung nach dem vorhergehenden Anspruch, **dadurch gekennzeichnet, dass** das untere Verankerungsteil entlang der Innenseite einer Seitenwand der kastenförmigen Halterung angeordnet ist.

4. Ausgestaltung nach einem der vorhergehenden Ansprüche, **dadurch gekennzeichnet, dass** das untere Verankerungsteil (PIA) des Sicherheitsgurtes ein feststehendes Verankerungsteil ist.

5. Ausgestaltung nach einem der vorhergehenden Ansprüche, **dadurch gekennzeichnet, dass** das untere Verankerungsteil (PIA) oder das Umlenkteil (PIR) für den Sicherheitsgurt (26) einer Anordnung (39) zur Straffung des Sicherheitsgurtes zugeordnet ist.

6. Ausgestaltung nach einem der vorhergehenden Ansprüche, **dadurch gekennzeichnet, dass** dem unteren Verankerungsteil (PIA) für den Sicherheitsgurt ein Aufroller (36) für das Gurtband (32) zugeordnet ist.

7. Ausgestaltung nach einem der vorhergehenden Ansprüche, **dadurch gekennzeichnet, dass** der Sicherheitsgurt eine Klinke (40,60) aufweist, deren Aussenteil vom Gurtband (32) in gleitender Weise durchsetzt wird und dass sie dazu dient, in lösbarer Weise in eine Schliessklappe (38,64) einzugreifen, die im Inneren der hohlen Halterung (18) befestigt ist.

8. Ausgestaltung nach einem der vorhergehenden Ansprüche, **dadurch gekennzeichnet, dass** der Sicherheitsgurt einem unteren Umlenkteil zugeordnet ist, das im Inneren der Halterung (18) angeordnet ist.

9. Ausgestaltung nach einem der vorhergehenden Ansprüche, **dadurch gekennzeichnet, dass** der Sitz (10) ein oberes Verankerungsteil (PSA) aufweist, das im oberen Abschnitt der Rücklehne angeordnet ist.

10. Ausgestaltung nach einem der Ansprüche 4 oder 5, **dadurch gekennzeichnet, dass** das andere freie Ende (44) des Gurtbandes (32) einem Bandaufroller (36) zugeordnet ist, der im oberen Abschnitt (56) der Rücklehne befestigt ist und dass das Gurtband ein Umlenkteil in gleitender Weise durchsetzt, wobei letzteres eine Klinke (40) aufweist, die in lösbarer Weise in eine Schliessklappe (38) eingreift, die im Inneren der hohlen Halterung (18) befestigt ist.

## Claims

1. A seat arrangement (10) of an automobile vehicle comprising a seat member (12) and a back (14), of the type in which the seat (10) is associated with a safety belt (26) comprising a strap (32) secured by a lower fastening point (PIA), a lower recall point (PIR) and an upper anchoring point (PSA) and in which the seat (10) is mounted detachably on a hollow support (18) independent from the seat structure, **characterised in that** at least the lower fastening point (PIA) is arranged within the support (18).

2. An arrangement as claimed in the preceding claim, **characterised in that** the hollow support (18) is a box whose upper open surface is at least partly closed by the seat member (12).

3. An arrangement as claimed in the preceding claim, **characterised in that** the lower fastening point is arranged along the inner surface of a lateral wall of the box-shaped support.

4. An arrangement as claimed in any one of the preceding claims, **characterised in that** the lower fastening point (PIA) of the safety belt is a fixed fastening point.

5. An arrangement as claimed in any one of the preceding claims, **characterised in that** the lower fastening point (PIA) or lower recall point (PIR) of the safety belt (26) is associated with a device (39) for tensioning the safety belt.

6. An arrangement as claimed in any one of the preceding claims, **characterised in that** the lower fastening point (PIA) of the safety belt is associated with a winder (36) for the strap (32).

7. An arrangement as claimed in any one of the preceding claims, **characterised in that** the safety belt (26) comprises a catch (40,60) whose body is traversed in a sliding manner by the strap (32) and which is adapted to be received in a detachable manner in a latch (38, 64) fixed within the hollow support (18).

8. An arrangement as claimed in any one of the preceding claims, **characterised in that** the safety belt (26) is associated with a lower recall device disposed within the support (18).

9. An arrangement as claimed in any one of the preceding claims, **characterised in that** the seat (10) comprises an upper anchoring point (PSA) located at the upper portion of the seat back.

10. An arrangement as claimed in one of claims 4 or 5, **characterised in that** the other free end (44) of the strap (32) is associated by a strap winder (36) which is fixed to the upper portion (56) of the seat back, and **in that** the strap comprises a recall in which the strap slides and which comprises a catch (40) which is received in a detachable manner in a latch (38) fixed within the hollow support (38).
